# EUROPÄISCHE PATENTANMELDUNG

(11) **EP 1 780 099 A1**
(43) Veröffentlichungstag der Anmeldung: **02.05.2007**
(21) Anmeldenummer: 06119979.0
(22) Anmeldetag: 01.09.2006
(51) Int. Cl.: B62D 5/06

(54) **Hydraulisches Lenksystem mit einem Aktuator**

(30) Priorität: 28.10.2005 DE 102005051664
(71) Anmelder: Bayerische Motoren Werke Aktiengesellschaft, 80809 München (DE)
(72) Erfinder: Bootz, Andreas, 80804, München (DE)

(57) **Zusammenfassung**

Ein hydraulisches Lenksysteme mit einem Lenkgestänge (12) und einem das Lenkgestänge betätigenden Aktuator (12a), dem unter Druck stehendes Hydraulikfluid zuführbar und von dem das Hydraulikfluid durch eine Rücklaufleitung (18) abführbar ist, ist erfindungsgemäß dadurch gekennzeichnet, dass in der Rücklaufleitung (18) ein druckabhängig veränderbarer Durchflusswiderstand (26) dem abgeführten Hydraulikfluidstrom entgegengesetzt ist.

## Beschreibung

Die Erfindung betrifft ein hydraulisches Lenksysteme mit einem Lenkgestänge und einem das Lenkgestänge betätigenden Aktuator, dem unter Druck stehendes Hydraulikfluid zuführbar und von dem das Hydraulikfluid durch eine Rücklaufleitung abführbar ist.

Hydraulische Lenksysteme der oben genannten Art sind beispielsweise als eine Zahnstangenhydrolenkung gestaltet und umfassen eine Pumpe, mittels der zu einem Aktuator der Zahnstangenhydrolenkung Hydraulikfluid unter Druck gefördert werden kann. Auf diese Weise kann der Fahrer eines zugehörigen Fahrzeugs beim Lenken unterstützt werden. Die Pumpe ist mittels einer Zuflussleitung mit der Zahnstangenhydrolenkung verbunden und es ist ferner eine Rücklaufleitung vorgesehen, mittels der Hydraulikfluid von der Zahnstangenhydrolenkung in einen Vorratsbehälter zurückgefördert werden kann.

Bei derartigen Lenksystemen führen Achsschwingungen, die sich beim Überfahren von Bodenunebenheiten im eingelenkten Zustand entstehen, zu schnellen Bewegungen der Zahnstange der Zahnstangenhydrolenkung. Durch diese Bewegungen sowie die damit verbundenen Lastschwingungen werden hohe Volumenstromspitzen im Lenksystem hervorgerufen.

Die Pumpe fördert hingegen einen konstanten Volumenstrom in das Lenksystem, so dass sich anschließend an die Volumenstromspitzen Volumenstromsenken ergeben. In der Rücklaufleitung der Lenksysteme führen diese Volumenstromsenken zu sehr starken Druckabsenkungen bis unter den Umgebungsdruck. Dies kann unter Umständen dazu führen, dass der Volumenstrom abreißt und aufgrund der Masseneigenschaften des Fluids eine "Zugspannung" in der strömenden Fluidsäule auftritt.

Aufgrund der Druckabsenkung entstehen in der Rücklaufleitung Kavitationsblasen, in denen Hydraulikfluid verdampft. Diese Kollabieren mit sehr hoher Geschwindigkeit und erzeugen dabei hochfrequente Druckspitzen. Diese Druckspitzen führen zu einer Körperschallanregung der das Hydraulikfluid leitenden Bauteile. Dadurch wird die Entstehung von Kavitationsblasen am Fahrzeug deutlich hörbar, was ein akustisches Qualitätsproblem darstellt.

Dieses Akustikphänomen tritt je nach Eigenfrequenz der gesamten Achskinematik des Lenksystems mehrmals hintereinander mit einer Frequenz von ca. 10 bis 20 Hz auf. Die einzelnen Ereignisse folgen also in kurzen Abständen aufeinander und erzeugen somit ein klapperndes Geräusch. Vom Fahrer des zugehörigen Fahrzeugs werden solche Geräusche als besonders störend empfunden.

Bei bekannten Lenksystemen begegnet man diesem Problem durch ein Aufstauen der Rücklaufleitung mit Hilfe einer Blende, welche in der Mitte bzw. am Ende der Rücklaufleitung angeordnet ist. Mit der Blende ergibt sich in der Rücklaufleitung ein erhöhter Druck, mit dem ein Entstehen von Kavitationen verhindert wird. Zugleich ergibt sich aber auch ein unerwünschter Druckverlust, mit dem die Leistungsaufnahme des Lenksystems erhöht wird. Der Kraftstoffverbrauchsanteil für das Lenksystem steigt somit an. Darüber hinaus ist eine höhere Kühlleistung in extremen Fahrsituationen mit hoher thermischer Belastung (z.B. bei Hochgeschwindigkeitsfahrt oder Bergfahrt) erforderlich.

Es ist eine Aufgabe der Erfindung ein hydraulisches Lenksystem der eingangs genannten Art zu schaffen, bei dem die genannten akustischen Probleme vermieden sind und zugleich ein vergleichsweise geringer Energieaufwand für das Lenksystem erforderlich ist.

Die Aufgabe ist erfindungsgemäß mit einem hydraulischen Lenksystem nach Anspruch 1 gelöst. Vorteilhafte Weiterbildungen sind in den abhängigen Ansprüchen beschrieben.

Gemäß der Erfindung ist bei einem hydraulischen Lenksystem in dessen Rücklaufleitung vom Aktuator zu einem Vorratsbehälter ein druckabhängig veränderbarer Durchflusswiderstand dem abgeführten Hydraulikfluidstrom entgegengesetzt. Mit anderen Worten ist erfindungsgemäß in der Rücklaufleitung stromab von einem Aktuator des Lenksystems ein Dämpfungsventil angeordnet, welches wahlweise zugeschaltet wird bzw. werden kann um den Rücklauf aufzustauen.

Wenn bei dem derart verbesserten Lenksystem eine Volumenstromspitze im Hydrauliksystem auftritt, die deutlich über den Nennvolumenstrom hinausgeht, so wird der Rücklauf erfindungsgemäß verstärkt aufgestaut. Dadurch steigt der Druckverlust in der Rücklaufleitung und es stellt sich bedarfsgerecht eine dämpfende Wirkung ein, ohne dass es andauernd zu einem Aufstauen von Hydraulikfluid und einem damit verbundenen Energieverbrauch kommt.

Gemäß der Erfindung ist daher auch bevorzugt der druckabhängig veränderbare Durchflusswiderstand mittels eines in den Strömungsweg des Hydraulikfluids hineinschaltbaren Drosselventils gestaltet.

Bei einer vorteilhaften Weiterbildung der Erfindung weist das Drosselventil einen Kolben auf, der in einem Zylinder gegen die Kraft eines Federelements verschiebbar geführt ist und bei seiner Verschiebung die vom Hydraulikfluid durchströmbare Fläche verändert. Wenn an einem derart gelagerten Kolben die oben genannte Volumenstromspitze im hydraulischen System auftritt, so steigt der Druckverlust an und der Differenzdruck am Kolben führt über die Kolbenfläche zu einer erhöhten Kolbenkraft. Diese Kolbenkraft wirkt entgegen der Kraft der vorgespannten Feder. Der Kolben wird nun aus seiner Ruhelage in Strömungsrichtung des Hydraulikfluids bewegt. Mit dieser Bewegung kann eine zunehmende Dämpfung der Strömung des Hydraulikfluids erreicht werden. Dies erfolgt bevorzugt, indem in dem Kolben insbesondere radiale Öffnungen vorgesehen sind, welche beim Verschieben des Kolbens zunehmend verschlossen werden. Durch das Schließen der Strömungswege durch diese Öffnungen wird der Differenzdruck am Kolben noch weiter erhöht, da nun der gleiche Gesamtvolumenstrom wie vor dem Schaltvorgang durch die verbleibenden Durchflussquerschnitte strömen muss. Aufgrund der durch die Volumenstromspitze eingeleiteten Schließbewegung geht das Drosselventil in einem sich selbst verstärkenden Mechanismus zu. Der Kolben fährt schließlich so weit in seine dämpfende Stellung, bis die genannten Öffnungen vollständig verschlossen sind und nur eine insbesondere an der Stirnfläche des Kolbens vorgesehene Öffnung eine Restströmung von Hydraulikfluid durchlässt. In dieser Position wird also keine seitliche Öffnung des Kolbens mehr vom Volumenstrom durchflossen. Nur die als Blende wirkende Öffnung an der Stirnfläche wird durchflossen und verursacht einen hohen Druckverlust, der den Kolben in dieser Stellung hält.

Durch das derartige Verfahren des Kolbens wird der Staudruck im hydraulischen System also stark angehoben. Das Drosselventil bleibt in dieser dämpfenden Stellung, selbst wenn der Volumenstrom im System auf den ursprünglichen Nennwert fällt, bei dem das Drosselventil im Ursprungszustand nicht schalten sollte. Der Kolben beginnt nämlich mit einer Rückbewegung erst, wenn der Volumenstrom auf einen Wert fällt, der einen so niedrigen Druckverlust verursacht, dass die Feder den Kolben entgegen der Strömungskraft in seine Ausgangsposition zurückbewegen kann. Dieses Hystereseverhalten des Drosselventils ist bewusst so gestaltet, damit nach der ersten auftretenden Volumenstromspitze das Drosselventil zuschaltet und so lange in der geschalteten Position verharrt, bis der Volumenstrom auf ein sehr niedriges Niveau abfällt. Dies kann z.B. der Fall sein, wenn der Verbrennungsmotor ausgeschaltet oder der Volumenstrom einer geregelten Pumpe gezielt abgesenkt wird, sofern es die Fahrsituation etwa bei Geradeausfahrt oder hoher Fahrgeschwindigkeit erlaubt. Beim Überfahren einer Fahrbahnunebenheit wird so bei der ersten Volumenstromspitze der Staudruck angehoben und selbst wenn Achsschwingungen zu stark schwankenden Volumenströmen führen, wird durch das geschaltet bleibende Drosselventil der Volumenstrom in der Rücklaufleitung des Systems aufgestaut und somit ein Entstehen von Kavitationen vermieden.

Um im Hinblick auf die oben genannte Funktion des erfindungsgemäßen hydraulischen Lenksystems eine Glättung der Druckschwingungen zu erzielen, ist es ferner bevorzugt, wenn dem druckabhängig veränderbaren Durchflusswiderstand ein Rücklaufleitungsabschnitt vorgeschaltet ist, welcher mittels eines Schlauches gestaltet ist. Ein Schlauch weist eine gewisse Flexibilität und Nachgiebigkeit in seiner Wandung auf, welche bei Druckspitzen zu einer elastischen Verformung und zu einer Minderung und Glättung von Druckstößen führen.

Nachfolgend werden Ausführungsbeispiele erfindungsgemäßer Lenksysteme anhand der beigefügten schematischen Zeichnungen näher erläutert. Es zeigt:
Fig. 1 ein stark vereinfachtes Schaubild eines hydraulischen Lenksystems gemäß dem Stand der Technik,
Fig. 2 ein stark vereinfachtes Schaubild eines Ausführungsbeispiels eines hydraulischen Lenksystems gemäß der Erfindung,
Fig. 3 einen Längsschnitt eines Ausführungsbeispiels eines druckabhängig veränderbaren Durchflusswiderstandes gemäß der Erfindung in dessen Ruhelage,
Fig. 4 den Längsschnitt gemäß Fig. 3 in einer betätigten Lage des Durchflusswiderstandes und
Fig. 5 ein Schaubild des Verlaufs des Druckes am erfindungsgemäßen Durchflusswiderstand mit zunehmendem Volumenstrom.

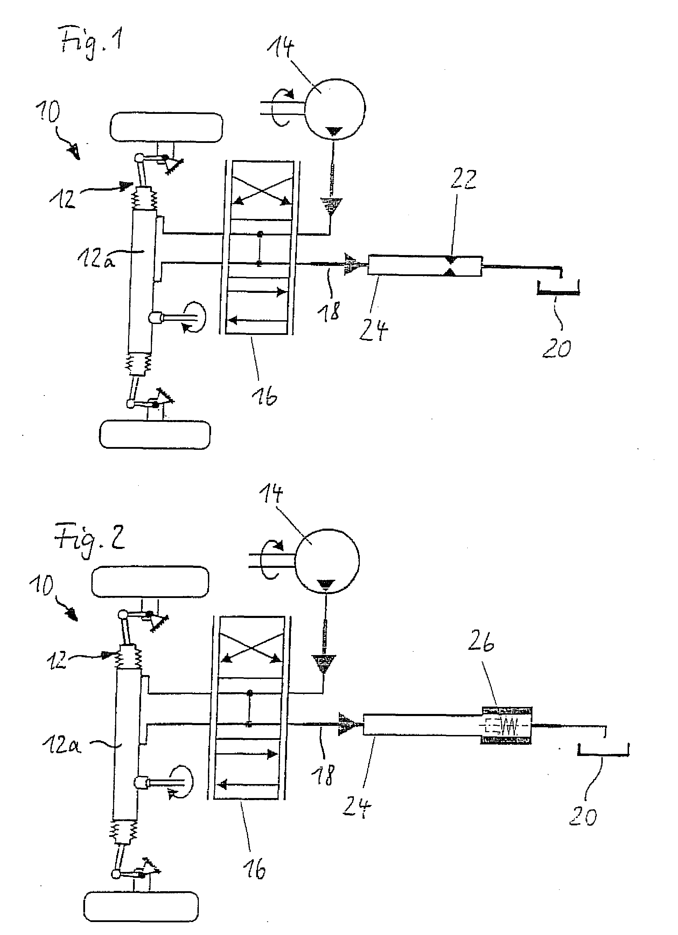

In Fig. 1 ist ein herkömmliches hydraulisches Lenksystem 10 veranschaulicht, welches für ein weiter nicht dargestelltes Kraftfahrzeug vorgesehen ist. Das Lenksystem 10 weist als wesentliche Elemente insbesondere ein Lenkgestänge 12 auf, welches mittels eines Aktuators 12a hydraulisch betätigbar ist, sowie eine Hydraulikdruck bereitstellende Pumpe 14. In das hydraulische Lenksystem 10 ist ein Lenkventil 16 integriert, mittels dem wahlweise eine Strömung von unter Druck stehendem Hydraulikfluid von der Pumpe 14 zum Lenkgestänge 12 und/oder durch eine Rücklaufleitung 18 zu einem Vorratsbehälter 20 geschaltet werden kann.

In der Rücklaufleitung 18 ist eine Blende 22 eingesetzt, mit der eine akustische Abstimmung bei Volumenstromspitzen vorgenommen, zugleich aber auch der Durchflusswiderstand dauerhaft erhöht ist.

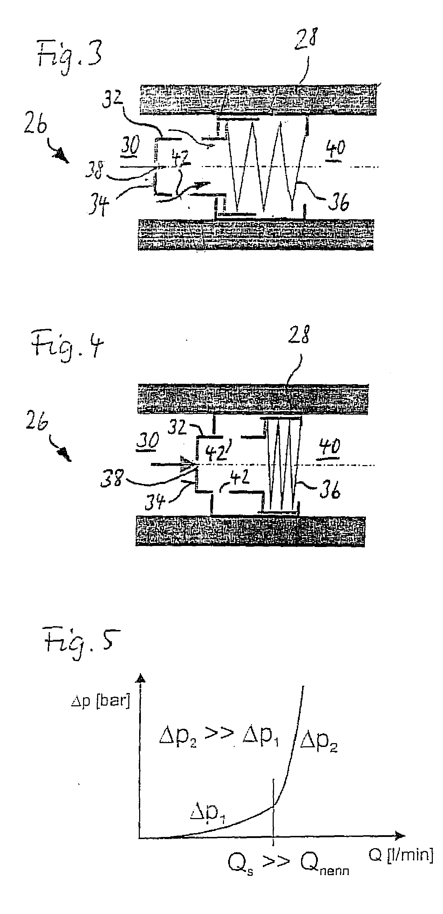

In Fig. 2 ist ein erfindungsgemäßes hydraulisches Lenksystem 10 veranschaulicht, welches ebenfalls ein hydraulisch betätigtes Lenkgestänge 12, einen Aktuator 12a, eine Pumpe 14, ein Lenkventil 16 und eine Rücklaufleitung 18 sowie einen entsprechend angeschlossenen Tank 20 aufweist. In der Rücklaufleitung 18 ist stromab von einem Schlauchabschnitt 24 ein druckabhängig veränderbarer Durchflusswiderstand 26 nachgeschaltet, der als ein bedarfsgerecht schaltbares Dämpferventil gestaltet ist. Dieses Dämpferventil weist zwei Schaltstellungen auf, von denen eine zu einem nahezu ungedämpften Durchstrom von Hydraulikfluid führt und die andere die von Hydraulikfluid durchströmbare Fläche derart verringert, dass es zu einer Stauwirkung in der Rücklaufleitung 18 kommt.

Der Durchflusswiderstand 22 schaltet sich dabei bei einem bestimmten Lastdruck selbsttätig zu, während er bei niedrigem Druck die Durchflussfläche wieder freigibt. Somit kann eine bedarfsorientierte Minderung von Volumenstromspitzen in der Rücklaufleitung 18 gewährleistet werden.

In Fig. 3 und 4 ist ein Ausführungsbeispiel eines Durchflusswiderstandes 26 dargestellt, welcher als eine Zylinder-Kolben-Anordnung gestaltet ist und ein im Wesentlichen hohlzylindrisches Ventilgehäuse 28 mit einem an einer Stirnseite angeordneten Einlass 30 aufweist. In dem Ventilgehäuse 28 ist ein Ventilkolben 32 verschiebbar geführt und derart an seiner Mantelfläche abgedichtet, dass er an seiner dem Volumenstrom zugewanden Stirnfläche eine Staufläche 34 bildet. An der gegenüberliegenden Seite ist der Ventilkolben 32 mit einem Federelement 36 am Ventilgehäuse 28 abgestützt und vorgespannt.

In dem Ventilkolben 32 ist ferner an der Staufläche 34 in Axialrichtung eine Mindestöffnung 38 und ein daran anschließender Auslass 40 ausgebildet. Zwischen der Mindestöffnung 38 und dem Auslass 40 sind im Ventilkolben 28 ferner in dessen Mantelfläche radiale Öffnungen 42 ausgebildet, durch die Hydraulikfluid von der Stauseite durch den Ventilkolben 32 abströmen kann (siehe Fig. 3). Dieses Abströmen von Hydraulikfluid ist insbesondere dann möglich, wenn in dem Schlauchabschnitt 24 der Rücklaufleitung 18 ein vergleichsweise geringer Druck herrscht und der Ventilkolben 32 durch das Federelement 36 bezogen auf Fig. 3 nach links gedrängt ist.

Bei Druckerhöhung in der Rücklaufleitung 18 wird der Ventilkolben 32 jedoch bezogen auf Fig. 3 und 4 nach rechts gegen die Federkraft des Federelements 36 verschoben und dabei werden die Öffnungen 42 verschlossen. Hydraulikfluid kann nun lediglich noch durch die Mindestöffnung 38 in den Auslass 40 abströmen (siehe Fig. 4).

Dies führt mit im Vergleich zum Nennvolumenstrom Qₙₑₙₙ zunehmendem Volumenstrom Qₛ (mit der Einheit l/min) zu einer entsprechenden Erhöhung der Widerstandswirkung des Durchflusswiderstandes 22 und damit zu einer Druckerhöhung von p₁ zu p₂ (mit der Einheit bar) entsprechend dem in Fig. 5 dargestellten Verlauf.

### Bezugszeichenliste

- 10: hydraulisches Lenksystem
- 12: Lenkgestänge
- 12a: Aktuator
- 14: Pumpe
- 16: Lenkventil
- 18: Rücklaufleitung
- 20: Vorratsbehälter
- 22: Blende
- 24: Schlauchabschnitt
- 26: druckabhängig veränderbarer Durchflusswiderstand
- 28: Ventilgehäuse
- 30: Einlass
- 32: Ventilkolben
- 34: Staufläche
- 36: Federelement
- 38: Mindestöffnung
- 40: Auslass
- 42: radiale Öffnung

## Patentansprüche

1. Hydraulische Lenksysteme (10) mit einem Lenkgestänge (12) und einem das Lenkgestänge (12) betätigenden Aktuator (12a), dem unter Druck stehendes Hydraulikfluid zuführbar und von dem das Hydraulikfluid durch eine Rücklaufleitung (18) abführbar ist,
**dadurch gekennzeichnet, dass** in der Rücklaufleitung (18) ein druckabhängig veränderbarer Durchflusswiderstand (26) dem abgeführten Hydraulikfluidstrom entgegengesetzt ist.

2. Hydraulisches Lenksystem nach Anspruch 1,
**dadurch gekennzeichnet, dass** der druckabhängig veränderbare Durchflusswiderstand (26) mittels eines in den Strömungsweg des Hydraulikfluids hineinschaltbaren Drosselventils gestaltet ist.

3. Hydraulisches Lenksystem nach Anspruch 2,
**dadurch gekennzeichnet, dass** das Drosselventil einen Kolben (32) aufweist, der in einem Zylinder (28) gegen die Kraft eines Federelements (36) verschiebbar geführt ist und bei seiner Verschiebung die vom Hydraulikfluid durchströmbare Fläche (38, 42) verändert.

4. Hydraulisches Lenksystem nach Anspruch 3,
**dadurch gekennzeichnet, dass** der Kolben (32) mindestens eine radial Öffnung (42) aufweist, welche durch ein Verschieben des Kolbens (32) aus seiner Ruhelage zumindest teilweise verschlossen werden kann.

5. Hydraulisches Lenksystem nach Anspruch 3 oder 4,
**dadurch gekennzeichnet, dass** der Kolben (32) mindestens eine Öffnung in einer Stirnfläche (34) aufweist, welche als Blende für das strömende Hydraulikfluid wirkt.

6. Hydraulisches Lenksystem nach einem der Ansprüche 1 bis 5,
**dadurch gekennzeichnet, dass** dem druckabhängig veränderbaren Durchflusswiderstand (26) ein Rücklaufleitungsabschnitt vorgeschaltet ist, welcher mittels eines Schlauches (24) gestaltet ist.
